(19) Europäisches Patentamt
European Patent Office
Office européen des brevets

(11) **EP 2 009 266 A2**

## (12) EUROPEAN PATENT APPLICATION

(43) Date of publication:
**31.12.2008 Bulletin 2009/01**

(51) Int Cl.:
*F02D 41/00* (2006.01)  *F02D 19/02* (2006.01)
*F02M 31/125* (2006.01)  *F02M 53/06* (2006.01)

(21) Application number: **08011530.6**

(22) Date of filing: **25.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **27.06.2007 JP 2007168479**

(71) Applicant: **Nissan Motor Co., Ltd.**
**Kanagawa 221-0023 (JP)**

(72) Inventors:
• **Oshihara, Kenzo**
  **Atsugi-shi**
  **Kanagawa 243-0123 (JP)**

• **Suzuki, Ai**
  **Atsugi-shi**
  **Kanagawa 243-0123 (JP)**
• **Kojima, Masaki**
  **Atsugi-shi**
  **Kanagawa 243-0123 (JP)**
• **Yamaguchi, Ryuta**
  **Atsugi-shi**
  **Kanagawa 243-0123 (JP)**

(74) Representative: **Schaeberle, Steffen et al**
**Hoefer & Partner**
**Patentanwälte**
**Pilgersheimer Strasse 20**
**81543 München (DE)**

(54) **A method of injecting fluid, a method of and apparatus for controlling injection of fluid, and an internal combustion engine**

(57) In a method of injecting a fluid with a liquid-to-gas-phase transition, the fluid is injected via a specified path of a change in an isobaric specific heat capacity per volume [Cp/V] of the fluid, the specified path leading from a temperature-pressure condition (i) to a temperature-pressure condition (ii). The condition (i) realizes an equality [Cp/V]-[Cp/V]L, where [Cp/V]L denotes an isobaric specific heat capacity per volume of the fluid in the liquid phase. The temperature-pressure condition (ii) realizes an equality [Cp/V]-[Cp/V]J, where [Cp/V]J denotes an isobaric specific heat capacity per volume of the fluid at timing of injection. The value [Cp/V]J is less than the value [Cp/V]L and included in a temperature-pressure region extending in close proximity to a high-temperature side of a temperature-pressure region corresponding to a temperature-pressure condition (iii) that realizes an isobaric specific heat capacity per volume [Cp/V]C greater than the value [Cp/V]L.

## FIG.2A

**Description**

<u>TECHNICAL FIELD</u>

The present invention relates to a method of injecting or spraying fluid, and specifically to the improvement of a technology of injecting fluid in a subcritical state or in a supercritical state near its critical point (its critical temperature and pressure), while gasifying the fluid without including most of the droplets.

<u>BACKGROUND ART</u>

In recent years, there have been proposed and developed various injection technologies of promoting atomization of fluid (e.g., fuel) by injecting or spraying the fluid in a subcritical state or in a supercritical state near its critical point. One such injection technology has been disclosed in Japanese Patent Provisional Publication No. 10-141170 (hereinafter is referred to as "JP10-141170"). In the injection technology disclosed in JP10-141170, an injector is configured in a manner so as to promote atomization of fuel into a fine spray by injecting the fuel in its supercritical state.

<u>SUMMARY OF THE INVENTION</u>

In the case of the injection technology as disclosed in JP10-141170, atomization of fuel can be promoted. However, even when injecting fuel in a subcritical state or in a supercritical state near its critical point, there is a problem of an insufficient gasification. This is because a temperature rise in the fuel is disturbed by a specific heat capacity rise in the fuel near the critical point. Owing to such a specific heat capacity rise in the fuel near the critical point, the fuel could not be gasified completely. It would be desirable to more finely atomizing and more completely gasifying fluid (e.g., fuel), when injecting the fluid with a phase transition from a liquid phase to a gaseous phase.

It is, therefore, in view of the previously-described disadvantages of the prior art, an object of the invention to provide a method of injecting fluid, a method of and apparatus for controlling injection of fluid, and an internal combustion engine employing the fluid-injection control apparatus, capable of finely atomizing and sufficiently gasifying the fluid without including most of the droplets, when injecting the fluid with a liquid-to-gas phase transition.

In order to accomplish the aforementioned and other objects of the present invention, a method of injecting a fluid with a phase transition from a liquid phase to a gaseous phase, the method comprises passing through a temperature-pressure condition (i) that realizes the following equality, as a path of a change in an isobaric specific heat capacity per volume [Cp/V] of the fluid: [Cp/V]-[Cp/V] L, where [Cp/V] L denotes an isobaric specific heat capacity per volume of the fluid in the liquid phase, and passing through a temperature-pressure condition (ii) that realizes the following equality, as the path of the change in the isobaric specific heat capacity per volume [Cp/V] of the fluid: [Cp/V]=[Cp/V]J, where [Cp/V]J denotes an isobaric specific heat capacity per volume of the fluid at timing of injection, which isobaric specific heat capacity per volume [Cp/V] J is less than the isobaric specific heat capacity per volume [Cp/V] L of the fluid in the liquid phase and included in a temperature-pressure region extending in close proximity to a high-temperature side of a temperature-pressure region corresponding to a temperature-pressure condition (iii) that realizes an isobaric specific heat capacity per volume [Cp/V] C of the fluid greater than the isobaric specific heat capacity per volume [Cp/V]L of the fluid in the liquid phase, wherein the fluid is injected via the path leading from the temperature-pressure condition (i) to the temperature-pressure condition (ii) .

According to another aspect of the invention, a method of controlling injection of a fluid with a phase transition from a liquid phase to a gaseous phase, after having pressurized and heated the fluid through a pressure chamber and a heat chamber, the method comprises detecting a pressure in the pressure chamber, detecting a temperature in the heat chamber, estimating an isobaric specific heat capacity per volume of the fluid, based on both of the detected pressure and the detected temperature, and controlling injection of the fluid, based on the estimated isobaric specific heat capacity per volume.

According to a further aspect of the invention, an apparatus for injecting a fluid with a phase transition from a liquid phase to a gaseous phase, comprises a pressure chamber provided for pressurizing the fluid, a heat chamber communicating the pressure chamber and provided for heating the fluid, an injection section that injects the fluid, pressurized through the pressure chamber and heated through the heat chamber, a pressure detection section that detects a pressure of the fluid in the pressure chamber, a temperature detection section that detects a temperature of the fluid in the heat chamber, an estimation section that estimates an isobaric specific heat capacity per volume of the fluid, based on both of the detected pressure and the detected temperature, and a control section that controls injection of the fluid, based on the estimated isobaric specific heat capacity per volume of the fluid.

According to an internal combustion engine comprises an apparatus for injecting a fuel with a phase transition from a liquid phase to a gaseous phase, the apparatus for injecting the fuel comprises a pressure chamber provided for pressurizing the fuel, a heat chamber communicating the pressure chamber and provided for heating the fuel, an injection section that injects the fuel, pressurized through the pressure chamber and heated through the heat chamber, a pressure detection section that detects a pressure of the fuel in the pressure chamber, a temperature detection section that detects a temperature of the fuel in the heat chamber, an estimation section that estimates an isobaric specific heat capacity per volume of the fuel, based on both of the detected pressure and the detected temperature, and a control section that controls injection of the fuel, based on the estimated isobaric specific heat capacity per volume of the fuel.

The other objects and features of this invention will become understood from the following description with reference to the accompanying drawings.

## BRIEF DESCRIPTION OF THE DRAWINGS

Fig. 1 is a T-P-[Cp/V] physical-property three-dimensional characteristic diagram illustrating the relationship among a temperature T, a pressure P, and an isobaric specific heat capacity per volume [Cp/V] of a fluid.

Fig. 2A is a schematic system diagram illustrating an embodiment of a fluid-injection control apparatus.

Fig. 2B is a flowchart showing a control routine executed within a controller incorporated in the fluid-injection control apparatus of the embodiment of Fig. 2A.

Fig. 3A is a side elevational view of a compressed self-ignition, direct-injection internal combustion engine, partly cross-sectioned and installing thereon a fluid-injection control apparatus having almost the same injection control system configuration as Fig. 2A, except a fuel-spray observation system.

Fig. 3B is a side elevational view of a spark-ignited internal combustion engine, partly cross-sectioned and installing thereon a fluid-injection control apparatus having almost the same injection control system configuration as Fig. 2A, except a fuel-spray observation system.

Figs. 4A-4D are T-P-[Cp/V] physical-property three-dimensional characteristic diagrams in the case of four different fuels, namely, normal heptane, butane, hexane, and toluene.

Fig. 5 is a contour map, obtained by flattening of the T-P-[Cp/v] physical-property three-dimensional characteristic diagram shown in Fig. 4A in the direction of the [Cp/V] axis.

## DESCRIPTION OF THE PREFERRED EMBODIMENTS

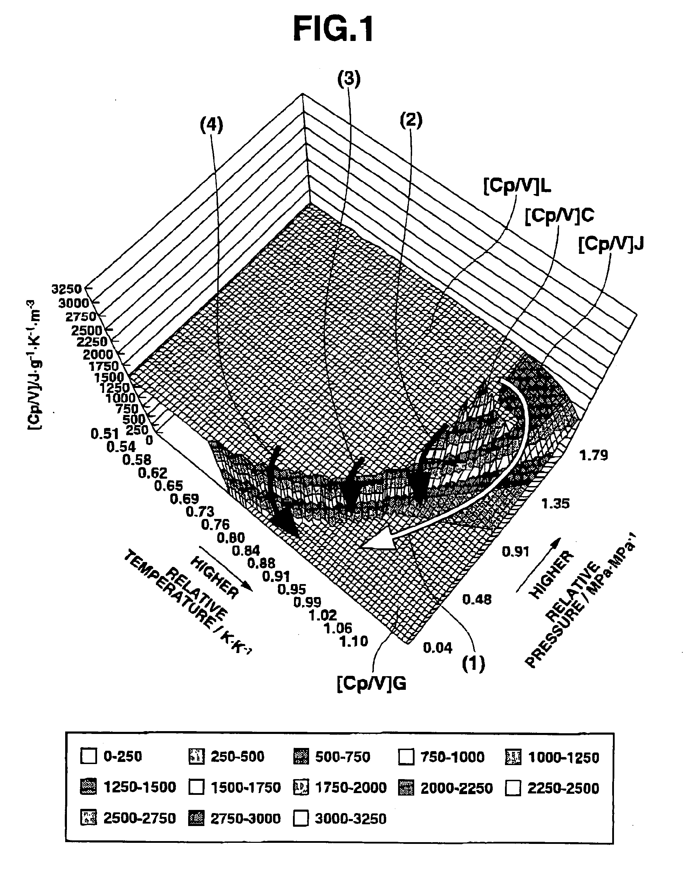

Referring now to the drawings, particularly to Fig. 1, there is shown the T-P-[Cp/V] physical-property three-dimensional characteristic diagram illustrating the relationship among a temperature T (exactly, a relative temperature against the critical temperature), a pressure P (exactly, a relative pressure against the critical pressure), and an isobaric specific heat capacity per volume [Cp/V] of a fluid (e.g., a fuel such as a normal heptane). As clearly shown in Fig. 1. a change of isobaric specific heat capacity per volume [Cp/V] of this fluid with respect to both of temperature T and pressure P is schematically drawn as a two-layer structure, namely, upper and lower layers. More concretely, the upper-layer portion of isobaric specific heat capacity per volume [Cp/V] of the fluid indicates an isobaric specific heat capacity per volume [Cp/V]L of the fluid conditioned in a liquid phase. Note that isobaric specific heat capacity per volume [Cp/V]L of the fluid conditioned in a liquid phase tends to somewhat fluctuate or vary within a certain range, but not fixed to a constant value, due to various factors, i.e., individual differences of physical properties of fluids of the same sort, and the like. The lower-layer portion of isobaric specific heat capacity per volume [Cp/V] of the fluid indicates an isobaric specific heat capacity per volume [Cp/V]G of the fluid conditioned in a gaseous phase. As can be seen from the T-P-[Cp/V] physical-property characteristic diagram of Fig. 1, a raised T-P-[Cp/V] region, which includes a critical point (corresponding to a peak value of the isobaric specific heat capacity per volume [Cp/V] of the fluid) and has an isobaric specific heat capacity per volume [Cp/V]C greater than isobaric specific heat capacity per volume [Cp/V]L of the fluid conditioned in the liquid phase, further exists. Additionally, note that a sloped T-P-[Cp/V] region, which extends in close proximity to the high-temperature side of the raised T-P-[Cp/V] region and has an intermediate value [Cp/V]J less than isobaric specific heat capacity per volume [Cp/V]L of the fluid in the liquid phase and greater than isobaric specific heat capacity per volume [Cp/V]G of the fluid in the gaseous phase, further exists. The inventors of this invention have paid their attention to the fact that a temperature rise in the injected or sprayed fluid is disturbed due to a rise in a specific heat capacity of the fluid near its critical point, and thus aimed at a path of a change in isobaric specific heat capacity per volume [Cp/V] of the fluid, as a result of repeated studies. The inventors have discovered that it is possible to optimize atomization of fluid and completely gasify the fluid by controlling the temperature T and pressure P of the fluid in such a manner as to achieve a desired path (hereinafter described in detail) of a change in isobaric specific heat capacity per volume [Cp/V] of the fluid. On the assumption that the previously-described upper-layer [Cp/V] portion is identified as a temperature-pressure condition (i) that realizes isobaric specific heat capacity per volume [Cp/V]L of the fluid in the liquid phase and is defined by the following equality (1), the previously-described sloped [Cp/V] portion is identified as a temperature-pressure condition (ii) that realizes the intermediate isobaric specific heat capacity per volume [Cp/V]J of the fluid and is defined by the following equality (2), the previously-described raised [Cp/V] portion is identified as a temperature-pressure condition (iii) that realizes isobaric specific heat capacity per volume [Cp/V]C greater than isobaric specific heat capacity per volume [Cp/V]L of the fluid in the liquid phase, and the previously-described lower-layer [Cp/V] portion is identified as a temperature-pressure condition (iv) that realizes isobaric specific heat capacity per volume [Cp/V] G of the fluid in the gaseous phase, the desired path of a change in isobaric specific heat capacity per volume [Cp/V] of the fluid to be injected is a path leading from the temperature-pressure condition (i) via the temperature-pressure condition (ii) to the temperature-pressure condition (iv), or a path leading from the temperature-pressure condition (i) via the temperature-pressure condition (iii) and the temperature-pressure condition (ii) to the temperature-pressure condition (iv) in that order.

$$[Cp/V] = [Cp/V] L \qquad \cdots (1)$$

$$[Cp/V] = [Cp/V] J \qquad \cdots (2)$$

If necessary, the latter path (i.e., (i) → (iii) → (ii) → (iv)) may be utilized or selected. From the viewpoint of more preferable fluid injection (exactly, more efficient and more fine atomization of the injected fluid), the former path (i.e., (i) → (ii) → (iv)) is superior to the latter path, for the reasons discussed below.

In the T-P-[Cp/V] physical-property characteristic diagram of Fig. 1, the more preferable path of a change in isobaric specific heat capacity per volume [Cp/V] of the fluid injected or sprayed with a liquid-to-gas phase transition, that is to say, the former path (i) → (ii) → (iv) is indicated by the arrow (1). In the case of the path (i) → (ii) → (iv), indicated by the arrow (1), the high-pressure and high-temperature side of the upper-layer [Cp/V] portion (i.e., temperature-pressure condition (i)) having isobaric specific heat capacity per volume [Cp/V]L and the sloped T-P-[Cp/V] region, extending in close proximity to the high-temperature side of the raised T-P-[Cp/V] region, are utilized, thus easily creating a supercritical-state single phase or a critical-state single phase. As a result of this, it is possible to realize fine atomization and complete gasification of the fluid without including most of the droplets.

on the other hand, in the case of the preferable path concerning a change in isobaric specific heat capacity per volume [Cp/V] of the fluid injected or sprayed with a liquid-to-gas phase transition, that is to say, the previously-discussed path (i) → (iii) → (ii) → (iv), this path must partially pass through the raised T-P-[Cp/V] region including the critical point and having a comparatively greater isobaric specific heat capacity per volume [Cp/V]C. In such a case, a rise in isobaric specific heat capacity (exactly, an isobaric molar specific heat capacity) Cp tends to disturb a temperature rise in the fluid and therefore there is a slight difficulty of realizing the aforementioned temperature-pressure condition (iii).

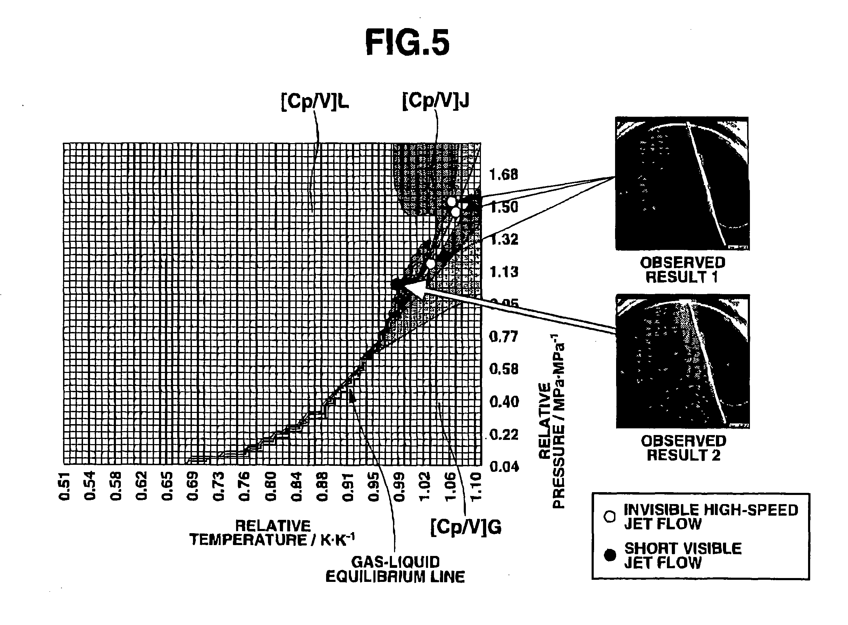

In contrast to the above, in the case of three paths concerning a change in isobaric specific heat capacity per volume [Cp/V], indicated by the respective arrows (2), (3), and (4) in Fig. 1, a remarkable temperature fall tends to occur during adiabatic expansion of the fluid injected or sprayed with a liquid-to-gas phase transition. This leads to the problem of a phase separation (or a phase segregation) into two phases such as gas-liquid. In such cases, indicated by the arrows (2), (3), and (4), each of which passes through a so-called gas-liquid equilibrium line (see the gas-liquid equilibrium line shown in Fig. 5), there is an increased tendency for many droplets to be included in the injected fluid flow.

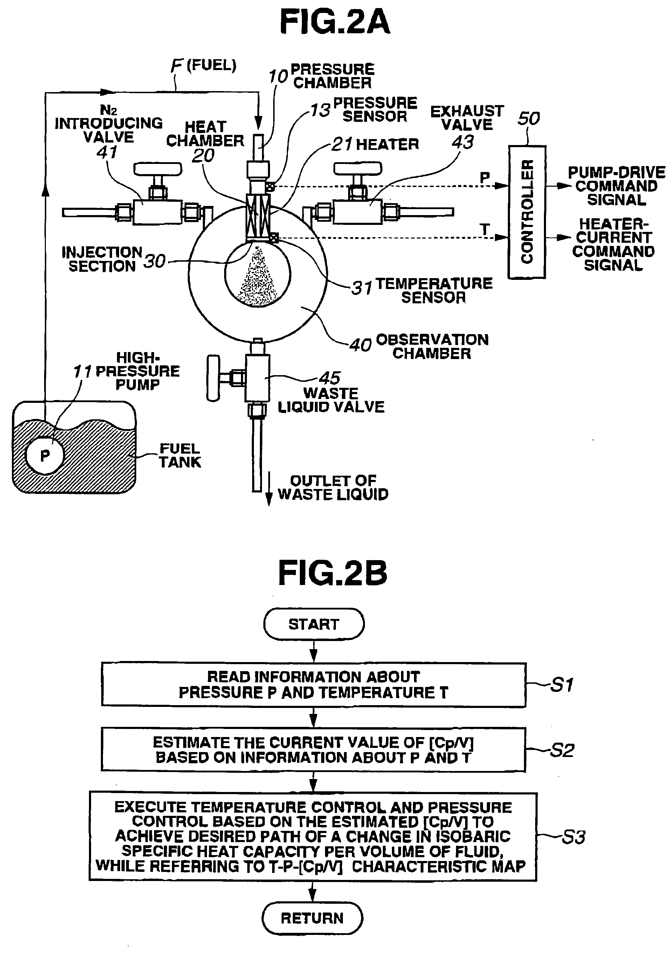

Actually, the previously-discussed path (i) → (ii) → (iv) indicated by the arrow (1) in Fig. 1, can be achieved or realized by properly controlling temperature T and pressure P of the injected fluid by means of a fluid-injection control system (described later in reference to Figs. 2A-2B). For instance, suppose that, under an initial condition of the fluid to be injected or sprayed, temperature T and pressure P of the fluid are a room temperature and a normal pressure (e.g., an atmospheric pressure). The previously-described path (i) → (ii) → (iv). indicated by the arrow (1), can be achieved by pressurizing the fluid up to a pressure level of approximately 110% of its critical pressure at the room temperature and thereafter heating the pressurized fluid up to approximately 105% of its critical temperature. That is, by way of a combination of pressure control and temperature control for a fuel to be injected, it is possible to realize the path passing through the sloped T-P-[Cp/V] region (i.e., temperature-pressure condition (ii)) having the intermediate isobaric specific heat capacity per volume [Cp/V]J, subsequently to the upper-layer [Cp/V] portion (i.e., temperature-pressure condition (i)) having isobaric specific heat capacity per volume [Cp/V]L, while avoiding or bypassing the raised [Cp/V] portion (i.e., temperature-pressure condition (iii)) having isobaric specific heat capacity per volume [Cp/V] C. In other words, the previvusly-discussed desirable path (i) → (ii) → (iv), indicated by the arrow (1) in Fig- 1, can be achieved by properly pressurizing a fluid to be injected or sprayed up to the desired pressure level (e.g., an approximately 110% of its critical pressure) and almost simultaneously heating the pressurized fluid up to the desired temperature value (e.g., an approximately 105% of its critical temperature), such that a liquid-to-gas phase transition of the fluid can be created without passing through the gas-liquid equilibrium line (see the gas-liquid equilibrium line shown in Fig. 5).

In the fluid injection method of the embodiment, at timing of injection of the fluid, exactly, during a period immediately before injecting the fluid, isobaric specific heat capacity per volume [Cp/V] of the fluid is adjusted to a certain isobaric specific heat capacity per volume [Cp/V]J, which exists within the sloped T-P-[Cp/V] region (corresponding to temperature-pressure condition (ii)) by way of temperature control and pressure control, for fine atomization and complete gasification of the fluid, and whose magnitude is less than isobaric specific heat capacity per volume [Cp/V]L of the fluid in the liquid phase and greater than isobaric specific heat capacity per volume [Cp/V]G of the fluid in the gaseous phase.

By satisfying the relationship of the certain isobaric specific heat capacity per volume [Cp/V]J of the fluid at the timing of injection with each of isobaric specific heat capacity per volume [Cp/V]L of the fluid in the liquid phase and isobaric specific heat capacity per volume [Cp/V]G of the fluid in the gaseous phase, which relationship is defined by the following inequality (3), it is possible to effectively sustain an adiabatic expansion of the injected or sprayed and atomizing fluid having the intermediate isobaric specific heat capacity per volume [Cp/V]J at the timing of injection, because of a higher density of the fluid having the intermediate isobaric specific heat capacity per volume [Cp/V]J at the timing of injection in comparison with a density of the fluid having isobaric specific heat capacity per volume [Cp/V]G in the gaseous phase.

$$[Cp/V]L > [Cp/V]J > [Cp/V]G \qquad \cdots (3)$$

This realizes a wide-ranging finely-atomized and completely-gasified fluid supply.

Furthermore, in the fluid injection method of the embodiment, it is more preferable to satisfy the relationship of the certain isobaric specific heat capacity per volume [Cp/V]J of the fluid at the timing of injection with each of isobaric specific heat capacity per volume [Cp/V]L of the fluid in the liquid phase and isobaric specific heat capacity per volume [Cp/V]G of the fluid in the gaseous phase, which relationship is defined by the following inequality (4).

$$([Cp/V]L - [Cp/V]J) < ([Cp/V]J - [Cp/V]G) \qquad \cdots (4)$$

By satisfying the relationship of the certain isobaric specific heat capacity per volume [Cp/V]J of the fluid at the timing of injection with each of isobaric specific heat capacity per volume [Cp/V]L of the fluid in the liquid phase and isobaric specific heat capacity per volume [Cp/V]G of the fluid in the gaseous phase, which relationship is defined by the above inequality (4), it is possible to reconcile both of a suppression in a rapid drop in isobaric specific heat capacity Cp of the fluid (in other words, a moderate drop in isobaric specific heat capacity Cp or a properly suppressed fluid-temperature fall) and a properly sustained adiabatic expansion of the injected or sprayed and atomizing fluid (in other words, a properly suppressed velocity in adiabatic expansion of the atomizing fluid). Thus, during the adiabatic-expansion process of the injected or sprayed and atomizing fluid, it is possible to effectively avoid an undesirable liquefaction of the fluid occurring due to a temperature fall in the fluid and additionally avoid an undesirably reduced expansibility of the atomizing fluid. It will be appreciated that the fluid injection method of the embodiment can be applied to a fuel injection system of an internal combustion engine. In such a case, according to the fluid injection method of the embodiment, it is possible to avoid an excessive drop in the density of the injected or sprayed fuel, thus preventing an undesirable fall in engine output torque.

In the fluid injection method of the embodiment discussed in reference to the T-P-[Cp/V] physical-property characteristic diagram shown in Fig. 1, a fuel such as a normal heptane is exemplified as a fluid to be injected. It will be understood that the invention is not limited to the particular fluid shown and described herein, but that the fluid injection method of the embodiment may be applied to various fluids, each of which is conditioned in a liquid state at normal pressure and temperature, such as various alcoholic solvents, various hydrocarbon solvents and various fuels for use in a power unit of an internal combustion engine, more concretely, butane, hexane, toluene, gasoline, light oil, heavy oil, and the like. Also, the fluid injection method of the embodiment may be applied to a mixture of at least two fuels, such as a mixture of methanol and gasoline, often called "bio-gasoline fuel", or a fatty acid methyl ether, often called "bio-diesel fuel".

Moreover, the fluid injection method of the embodiment can be suitably applied to fluids each having a physical property that isobaric specific heat capacity per volume [Cp/V]C of the raised [Cp/V] portion (i.e., temperature-pressure condition (iii)) is 1750 $J/g \cdot K \cdot m^3$ or more, for instantaneous atomization injection. As a typical example of such a fluid whose isobaric specific heat capacity per volume [Cp/V]C is greater than or equal to 1750 $J/g \cdot K \cdot m^3$, a motor fuel (a motor spirit or a fuel for an internal combustion engine) is enumerated. By the application of the fluid injection method of the embodiment to such a motor fuel, it is possible to realize instantaneous atomization injection of the motor fuel, thus effectively suppressing formation of particulate matter (PM) such as soot, and also ensuring efficient and good burning of the fuel. This contributes to a clean engine.

Referring now to Fig. 2A, there is shown the system diagram of the fluid-injection control apparatus of the embodiment. As seen in Fig. 2A, the fluid-injection control apparatus of the embodiment includes a substantially cylindrical-hollow pressure chamber 10, a heat chamber 20, and an injection section 30. In the system shown in Fig. 2A, as an example of a fluid to be injected or sprayed, a fuel F for an internal combustion engine is used. Pressure chamber 10 and heat chamber 20 are communicated with each other, and heat chamber 20 and injection section 30 are communicated with each other. In Fig. 2A, an observation chamber 40, which communicates the injection section 30, is also provided only for observation of the atomizing state of a fuel spray. As can be seen in Fig. 2A, the fuel-spray observation system is constructed by a nitrogen introducing valve (a $N_2$ introducing valve) 41, an exhaust valve 43, and a waste liquid valve 45, in addition to observation chamber 40. $N_2$ introducing valve 41 is provided for introducing nitrogen gas into observation chamber 40. Exhaust valve 43 is provided for exhausting the gas from observation chamber 40. waste liquid valve 45 is provided for the drainage of waste liquid from observation chamber 40. Fuel F stored in a fuel tank is pressurized by a high-pressure pump 11, and then delivered to pressure chamber 10 connected via a pump discharge line to pump 11. A pressure sensor 13 is provided and screwed into pressure chamber 10, for detecting a fuel pressure. A heater 21 is provided for heating the fluid (fuel F) supplied into heat chamber 20. A temperature sensor 31 is installed in injection section 30, for detecting a temperature of the sprayed fluid (the injected fuel F). Injection section 30 is constructed by an injection nozzle whose bore diameter is set to a bore size (an inside diameter) of approximately $\phi 30 \mu m$, and a valve configured to open or close a nozzle hole of the injection nozzle. The injection nozzle and the valve are also configured to achieve the fulfillment of at least the previously-discussed temperature-pressure condition (i) that realizes isobaric specific heat capacity per volume [Cp/V]L of fuel F in the liquid phase and corresponds to a condition at which the fluid has a highest density. In the shown embodiment, the valve is constructed by a spring-loaded, fluid-pressure actuated needle valve. In lieu thereof, the valve may be constructed by a piezoelectric-element-actuated valve or an electromagnetically-actuated valve.

Also provided is a fluid-injection controller (simply, a controller) 50. Controller 50 generally comprises a microcomputer. Controller 50 includes an input/output interface (I/O), memories (RAM, ROM), and a microprocessor or a central processing unit (CPU). The input/output interface (I/O) of controller 50 receives at least input information from pressure sensor 13 and temperature sensor 31. Within controller 50, the central processing unit (CPU) allows the access by the I/O interface of input informational data signals from the previously-discussed sensors 13 and 31. The CPU of controller 50 is responsible for carrying a fluid-injection control program (described later in reference to the flowchart shown in Fig. 2B) stored in memories and is capable of performing necessary arithmetic and logic operations. Computational results (arithmetic calculation results), that is, calculated output signals are relayed through the output interface circuitry of the controller to output stages, namely pump 11 and heater 21, for the purpose of pressure control and temperature control for the sprayed fluid (the injected fuel F). Concretely, the controller generates a pump-drive command signal to pump 11 for pressure control for the injected fuel F, and generates a heater-current command signal to heater 21 for temperature control for the injected fuel F. In addition, although it is not clearly shown in Fig. 2A. controller 50 is configured to control the injection timing (i.e., the opening and closing) of injection section 30.

Referring now to Fig. 2B, there is shown the control routine executed within controller 50 incorporated in the fluid-injection control apparatus of the embodiment of Fig. 2A. The routine shown in Fig. 2B is executed as time-triggered interrupt routines to be triggered every predetermined sampling time intervals.

At step S1, latest up-to-date information about pressure P detected by pressure sensor 13 and temperature T detected by temperature sensor 31, is read.

At step S2, the current value (more recent data) of isobaric specific heat capacity per volume [Cp/V] of the fluid (fuel F), which fluid is subjected to pressure control and temperature control, is estimated based on the detected pressure P and temperature T.

At step S3, temperature control (i.e., heater control) and pressure control (i.e., pump control) are executed based on the estimated isobaric specific heat capacity per volume [Cp/V], in such a manner as to achieve a desired path of a change in isobaric specific heat capacity per volume [Cp/V] of the fluid, while referring to a T-P-[Cp/V] physical-property three-dimensional characteristic diagram (prestored in the controller in the form of a characteristic map) inherent in the use fuel F, and showing the relationship of isobaric specific heat capacity per volume [Cp/V] of the use fuel F with temperature T and pressure P.

with the previously-discussed arrangement of the fluid-injection control system of the embodiment, first, the temperature-pressure condition of fuel F is controlled to temperature-pressure condition (i) or controlled via temperature-pressure condition (i) to temperature-pressure condition (iii), through pressure chamber 10 and heat chamber 20. Thereafter, during the period immediately before injecting fuel F from injection section 30, the temperature-pressure condition of fuel F is controlled in such a manner as to satisfy temperature-pressure condition (ii), thereby enabling the just-injected fuel having the intermediate isobaric specific heat capacity per volume [Cp/V]J less than [Cp/V]L and greater than [Cp/V] G to be created. In this manner, the previously-described more preferable path (i) → (ii) → (iv) or the preferable path (i) → (iii) → (ii) → (iv) can be achieved, thus enabling instantaneous atomization injection.

The fluid-injection control apparatus shown in Figs. 2A-2B is exemplified in a fuel-injection system for an internal combustion engine. It will be appreciated that the fluid-injection control apparatus of the invention is not limited to only the fuel-injection system, but that the fluid-injection control apparatus of the embodiment may be applied to another injection device such as an atomizer or a sprayer.

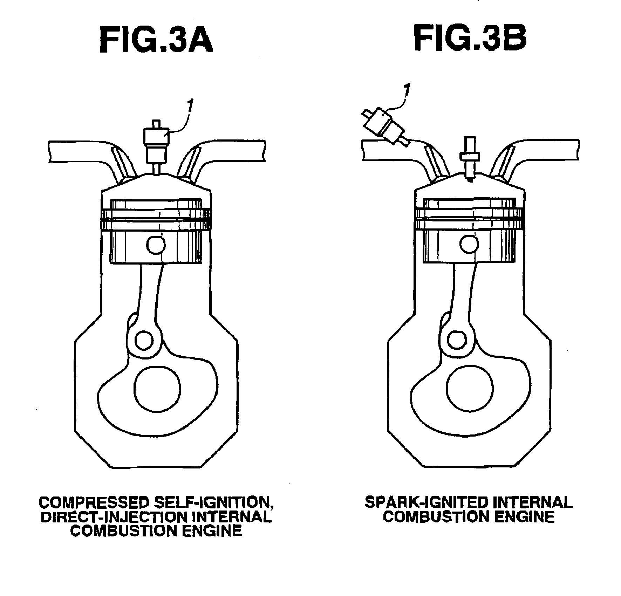

Fig. 3A shows the compressed self-ignition, direct-injection internal combustion engine employing a fluid-injection control apparatus 1 having almost the same injection control system configuration as Fig. 2A, except a fuel-spray observation system. On the other hand, Fig. 3B shows the spark-ignited internal combustion engine employing a fluid-injection control apparatus 1 having almost the same injection control system configuration as Fig. 2A, except a fuel-spray observation system. For the sake of simplicity, in each of Figs. 3A-3B, the pressure chamber, the heat chamber, and the injection section are schematically shown. In the compressed self-ignition, direct-injection internal combustion engine shown in Fig. 3A, fluid-injection control apparatus 1 is arranged substantially at the center of the upper wall of the combustion chamber. In the spark-ignited internal combustion engine shown in Fig. 3B, fluid-injection control apparatus 1 is arranged in the intake-valve port (slightly upstream of the intake valve). The use of fluid-injection control apparatus 1 enables optimally-tuned, instantaneous atomization injection (i.e., more finely atomized and more completely gasified fuel). As a result of this, it is possible to effectively suppress formation of particulate matter (PM) such as soot. This contributes to a clean engine and a reduced fuel consumption rate.

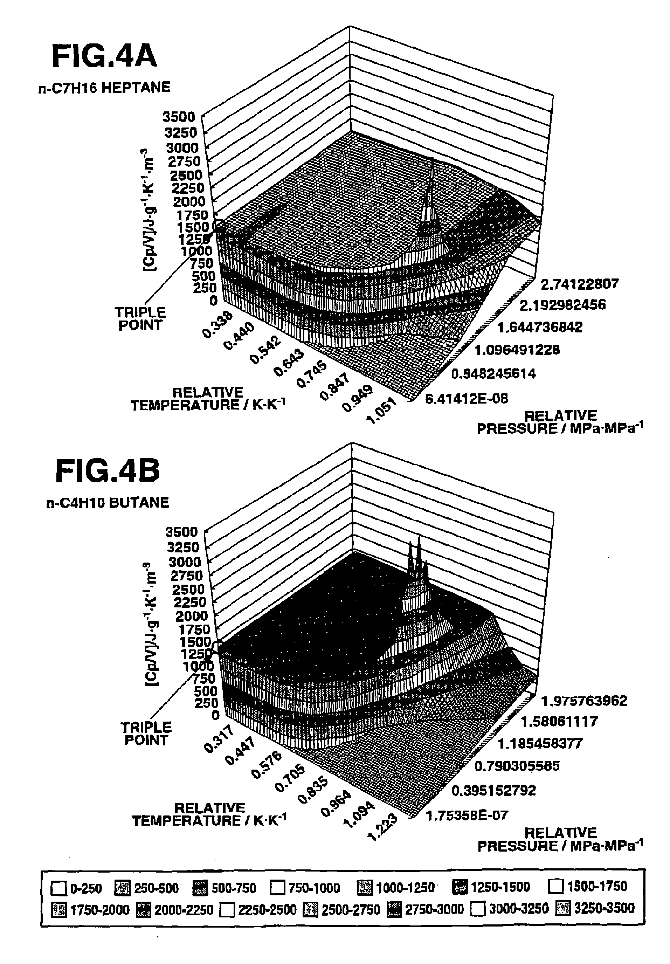

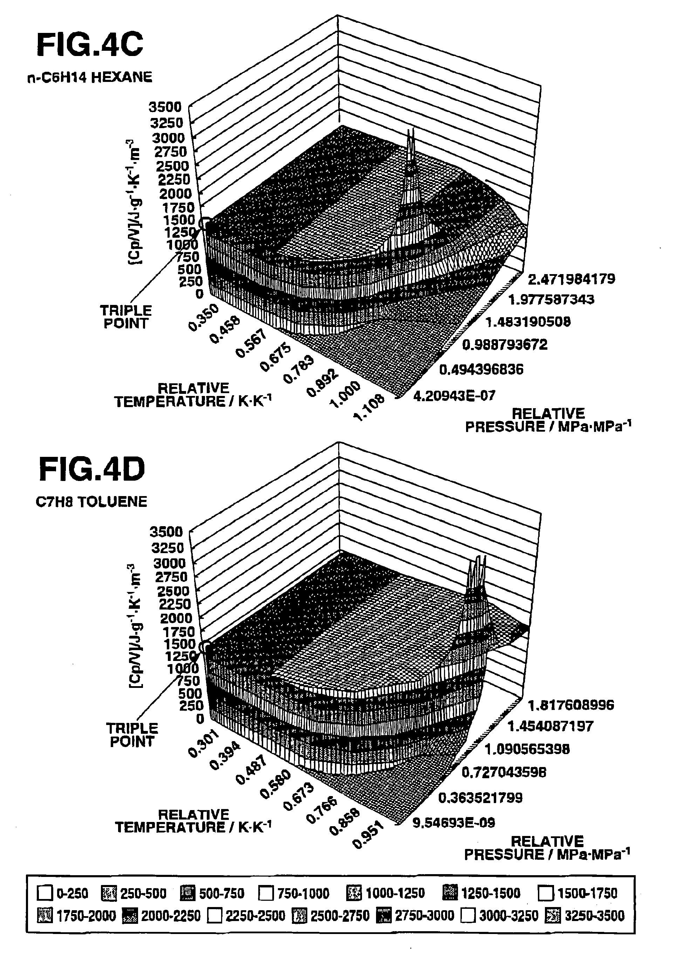

Referring now to Figs. 4A-4D, there are shown four T-P-[Cp/V] physical-property three-dimensional characteristic diagrams in the case of four different fuels, namely, normal heptane, butane, hexane, and toluene. As can be seen from the four T-P-[Cp/V] physical-property characteristic diagrams for the four different fuels (normal heptane, butane, hexane, and toluene) of Figs. 4A-4D, basically, these fuels have almost the same tendency in their T-P-[Cp/v] physical properties. That is, each of the T-P-[Cp/V] physical-property diagrams includes at least four regions, namely, the upper-layer [Cp/V] portion (i.e., temperature-pressure condition (i)) having isobaric specific heat capacity per volume [Cp/V]L, the sloped T-P-[Cp/V] region (i.e., temperature-pressure condition (ii)) having the intermediate isobaric specific heat capacity per volume [Cp/V]J, the raised [Cp/V] portion (i.e., temperature-pressure condition (iii)) having isobaric specific heat capacity per volume [Cp/V] C, and the lower-layer [Cp/V] portion (i.e., temperature-pressure condition (iv)) having isobaric specific heat capacity per volume [Cp/V] G. Therefore, it is possible to attain instantaneous atomization injection (in other words, an optimal phase transition from a liquid phase to a gaseous phase with more fine atomization and more complete gasification of the injected fuel), by accurately executing temperature control (i.e., heater control) and pressure control (pump control), both based on the estimated isobaric specific heat capacity per volume [Cp/V], in such a manner as to achieve a desired path (i.e., the path (i) → (ii) → (iv) or the path (i)→(iii)→(ii)→(iv)) of a change in isobaric specific heat capacity per volume [Cp/V] of the fluid.

Referring now to Fig. 5, there is shown the contour map, obtained by flattening of the T-P-[Cp/V] physical-property three-dimensional characteristic diagram shown in Fig. 4A in the direction of the [Cp/V] axis. As can be seen from four plots in Fig. 5, the injection test has been made at four different temperature-pressure conditions reached just before injecting fluid (normal heptane), and performed according to the following procedures. First, the fluid (normal heptane) is pressurized by high-pressure pump 11. The pressurized fluid is supplied from high-pressure pump 11 via the pump discharge line into pressure chamber 10, with injection section 30 kept closed. This results in a fluid pressure rise in pressure chamber 10. Thus, the fluid pressure in pressure chamber 10 reaches a specified fluid pressure, and then the high-pressure fluid is heated via heat chamber 20 by means of heater 21 energized, until a specified fluid temperature is reached. In this manner, the injection test has been made at four different, specified conditions of temperature and pressure. The upper two adjacent plots, each indicated by the voided circle in Fig. 5, exist within the sloped T-P-[Cp/V] region having the intermediate isobaric specific heat capacity per volume [Cp/V]J and extending in close proximity to the high-temperature side of the raised T-P-[Cp/V] region including the critical point. In other words, the more preferable path (i) → (ii) → (iv), as indicated by the arrow (1) in Fig. 1, has been attained by way of injection of the fluid (normal heptane) at each of the two different temperature-pressure conditions respectively corresponding to the upper two adjacent plots. In contrast, the lower plot, indicated by the black dot in Fig. 5, exists on the low-temperature side of the raised T-P- [Cp/V] region including the critical point. Injection of the fluid under the temperature-pressure condition corresponding to the lower plot, means that the actual temperature-pressure condition of the fluid was unable to exceed the raised T-P-[Cp/V] region (temperature-pressure condition (iii) of isobaric specific heat capacity per volume [Cp/V]C) in spite of temperature control and pressure control executed for satisfying temperature-pressure condition (iii) subsequently to temperature-pressure condition (i) of isobaric specific heat capacity per volume [Cp/V]L, and as a result the fluid injection undesirably occurred at the temperature-pressure condition (i), that is, an undesirable path (i) → (iii) → (i) concerning a change in isobaric specific heat capacity per volume [Cp/V] of the fluid. On the other hand, the intermediate plot, indicated by the voided circle in Fig. 5 and located substantially midway between the lower plot (indicated by the black dot) and the upper two adjacent plots (indicated by the two voided circles), exists within the sloped T-P-[Cp/V] region having the intermediate isobaric specific heat capacity per volume [Cp/V]J but closer to the raised T-P-[Cp/V] region rather than the upper two adjacent plots. In other words, the preferable path (i) → (iii) → (ii) → (iv) has been attained by way of injection of the fluid (normal heptane) at the temperature-pressure condition corresponding to

7

the intermediate plot. As soon as each of the four different, specified conditions of temperature and pressure has been reached, controller 50 outputs a trigger signal to injection section 30 so as to shift from its closed state to its fully-open state, and simultaneously outputs a synchronizing signal to a high-speed camera so as to operate the camera synchronously with the injection timing. The upper photograph of the right-hand side of Fig. 5 indicates the observed result 1, obtained by injection of the fluid (normal heptane) at each of the three different temperature-pressure conditions respectively corresponding to the upper two adjacent plots and the intermediate plot, all indicated by the voided circles in Fig. 5. In contrast, the lower photograph of the right-hand side of Fig. 5 indicates the observed result 2, obtained by injection of the fluid (normal heptane) at the temperature-pressure condition corresponding to the lower plot, indicated by the black dot in Fig. 5.

As can be seen from the observed result 1 (i.e., the upper photograph of the right-hand side of Fig. 5), in the case of injection of the fluid (normal heptane) at each of the three different temperature-pressure conditions respectively corresponding to the upper two adjacent plots and the intermediate plot, in other words, in the case of the desired path {the path (i) → (ii) → (iv) (see the arrow (1) shown in Fig. 1) or the path (i) → (iii) → (ii) →(iv) } of a change in isobaric specific heat capacity per volume [Cp/V] of the fluid, by virtue of the synergistic effect of a properly suppressed drop in isobaric specific heat capacity Cp of the fluid (in other words, a properly suppressed fluid-temperature fall) and a properly sustained adiabatic expansion of the injected or sprayed and atomizing fluid (in other words, a properly suppressed velocity in adiabatic expansion of the atomizing fluid), there are less droplets, observed by way of visual observation. That is, injecting the fluid (normal heptane) at each of the three different temperature-pressure conditions respectively corresponding to the upper two adjacent plots and the intermediate plot realizes invisible high-speed jet flow (or invisible high-speed instantaneous atomization fluid injection).

In contrast, as can be seen from the observed result 2 (i.e., the lower photograph of the right-hand side of Fig. 5), in the case of injection of the fluid (normal heptane) at the temperature-pressure condition corresponding to the lower plot, in other words, in the case of the undesirable path (i.e., the path (i) → (iii) → (i)) of a change in isobaric specific heat capacity per volume [Cp/V] of the fluid, there are many droplets (in other words, short visible jet flow), observed by way of visual observation.

As will be appreciated from the above, according to the fluid injection method of the embodiment, it is possible to achieve a desired path of a change in isobaric specific heat capacity per volume [Cp/V] of a fluid to be injected or sprayed with a liquid-to-gas phase transition by accurately executing temperature control (i.e., heater control) and pressure control (i.e-, pump control) for the fluid, based on the estimated isobaric specific heat capacity per volume [Cp/V], thus realizing fine atomization and complete gasification of the fluid.

The entire contents of Japanese Patent Application No. 2007-168479 (filed June 27, 2007) are incorporated herein by reference.

While the foregoing is a description of the preferred embodiments carried out the invention, it will be understood that the invention is not limited to the particular embodiments shown and described herein, but that various changes and modifications may be made without departing from the scope or spirit of this invention as defined by the following claims.

**Claims**

1. A method of injecting a fluid with a phase transition from a liquid phase to a gaseous phase, the method comprising:

passing through a temperature-pressure condition (i) that realizes the following equality, as a path of a change in an isobaric specific heat capacity per volume [Cp/V] of the fluid:

$$[Cp/V] = [Cp/V]_L$$

where [Cp/V]L denotes an isobaric specific heat capacity per volume of the fluid in the liquid phase; and passing through a temperature-pressure condition (ii) that realizes the following equality, as the path of the change in the isobaric specific heat capacity per volume [Cp/V] of the fluid:

$$[Cp/V] = [Cp/V]_J$$

where [Cp/V]J denotes an isobaric specific heat capacity per volume of the fluid at timing of injection, which isobaric specific heat capacity per volume [Cp/V]J is less than the isobaric specific heat capacity per volume [Cp/V]L of the fluid in the liquid phase and included in a temperature-pressure region extending in close proximity to a high-temperature side of a temperature-pressure region corresponding to a temperature-pressure condition (iii) that realizes an isobaric specific heat capacity per volume [Cp/V]C of the fluid greater than the isobaric specific heat capacity per volume [Cp/V]L of the fluid in the liquid phase,

wherein the fluid is injected via the path leading from the temperature-pressure condition (i) to the temperature-pressure condition (ii).

2. The method as claimed in claim 1, wherein:

the path leading from the temperature-pressure condition (i) to the temperature-pressure condition (ii) is either one of a path (i) → (ii) leading to the temperature-pressure condition (ii) subsequently to the temperature-pressure condition (i) and a path (i) → (iii) → (ii) leading from the temperature-pressure condition (i) via the temperature-pressure condition (iii) to the temperature-pressure condition (ii) .

3. The method as claimed in claim 2, wherein:

assuming that [Cp/V]G denotes an isobaric specific heat capacity per volume of the fluid in the gaseous phase, a relationship of the isobaric specific heat capacity per volume [Cp/V]J of the fluid at the timing of injection with each of the isobaric specific heat capacity per volume [Cp/V]L of the fluid in the liquid phase and the isobaric specific heat capacity per volume [Cp/V]G of the fluid in the gaseous phase, satisfies a relation defined by the following inequality:

$$[Cp/V]L > [Cp/V]J > [Cp/V]G$$

4. The method as claimed in claim 3, wherein:

the relationship of the isobaric specific heat capacity per volume [Cp/V]J of the fluid at the timing of injection with each of the isobaric specific heat capacity per volume [Cp/V]L of the fluid in the liquid phase and the isobaric specific heat capacity per volume [Cp/V]G of the fluid in the gaseous phase, further satisfies a relation defined by the following inequality:

$$([Cp/V]L - [Cp/V]J) < ([Cp/V]J - [Cp/V]G)$$

5. The method as claimed in claim 1, wherein:

the fluid is a fuel (F) for an internal combustion engine.

6. A method of controlling injection of a fluid with a phase transition from a liquid phase to a gaseous phase, after having pressurized and heated the fluid through a pressure chamber (10) and a heat chamber (20), the method comprising:

detecting a pressure (P) in the pressure chamber (10);
detecting a temperature (T) in the heat chamber (20);
estimating an isobaric specific heat capacity per volume of the fluid, based on both of the detected pressure (P) and the detected temperature (T); and
controlling injection of the fluid, based on the estimated isobaric specific heat capacity per volume.

7. The method of controlling injection as claimed in claim 6, wherein:

the pressure (P) of the fluid in the pressure chamber (10) and the temperature (T) of the fluid in the heat chamber (20) are controlled based on the estimated isobaric specific heat capacity per volume, when injecting the fluid with the phase transition from the liquid phase to the gaseous phase, for bringing a desired path of a change in an isobaric specific heat capacity per volume [Cp/V] of the fluid, the desired path comprising:

passing through a temperature-pressure condition (i) that realizes the following equality:

$$[Cp/V] = [Cp/V]L$$

where [Cp/V] L denotes an isobaric specific heat capacity per volume of the fluid in the liquid phase; and passing through a temperature-pressure condition (ii) that realizes the following equality:

$$[Cp/V] = [Cp/V]J$$

where [Cp/V]J denotes an isobaric specific heat capacity per volume of the fluid at timing of injection, which isobaric specific heat capacity per volume [Cp/V]J is less than the isobaric specific heat capacity per volume [Cp/V]L of the fluid in the liquid phase and included in a temperature-pressure region extending in close proximity to a high-temperature side of a temperature-pressure region corresponding to a temperature-pressure condition (iii) that realizes an isobaric specific heat capacity per volume [Cp/V]C of the fluid greater than the isobaric specific heat capacity per volume [Cp/V]L of the fluid in the liquid phase,

wherein the fluid is injected via the desired path leading from the temperature-pressure condition (i) to the temperature-pressure condition (ii).

8. The method of controlling injection as claimed in claim 7, wherein:

the desired path leading from the temperature-pressure condition (i) to the temperature-pressure condition (ii) is either one of a path (i) → (ii) leading to the temperature-pressure condition (ii) subsequently to the temperature-pressure condition (i) and a path (i) → (iii) → (ii) leading from the temperature-pressure condition (i) via the temperature-pressure condition (iii) to the temperature-pressure condition (ii).

9. The method of controlling injection as claimed in claim 8, wherein:

assuming that [Cp/V]G denotes an isobaric specific heat capacity per volume of the fluid in the gaseous phase, a relationship of the isobaric specific heat capacity per volume [Cp/V]J of the fluid at the timing of injection with each of the isobaric specific heat capacity per volume [Cp/V]L of the fluid in the liquid phase and the isobaric specific heat capacity per volume [Cp/V]G of the fluid in the gaseous phase, satisfies a relation defined by the following inequality:

$$[Cp/V]L > [Cp/V]J > [Cp/V]G$$

10. The method of controlling injection as claimed in claim 9, wherein:

the relationship of the isobaric specific heat capacity per volume [Cp/V]J of the fluid at the timing of injection with each of the isobaric specific heat capacity per volume [Cp/V]L of the fluid in the liquid phase and the isobaric specific heat capacity per volume [Cp/V]G of the fluid in the gaseous phase, further satisfies a relation defined by the following inequality:

$$([Cp/V]L - [Cp/V]J) < ([Cp/V]J - [Cp/V]G)$$

11. The method of controlling injection as claimed in claim 6, wherein:

the fluid is a fuel (F) for an internal combustion engine.

**12.** An apparatus for injecting a fluid with a phase transition from a liquid phase to a gaseous phase, comprising:

a pressure chamber (10) provided for pressurizing the fluid;
a heat chamber (20) communicating the pressure chamber (10) and provided for heating the fluid;
an injection section (30) that injects the fluid, pressurized through the pressure chamber (10) and heated through the heat chamber (20);
a pressure detection section (13) that detects a pressure (P) of the fluid in the pressure chamber (10);
a temperature detection section (31) that detects a temperature (T) of the fluid in the heat chamber (20);
an estimation section (50) that estimates an isobaric specific heat capacity per volume of the fluid, based on both of the detected pressure (P) and the detected temperature (T); and
a control section (50) that controls injection of the fluid, based on the estimated isobaric specific heat capacity per volume of the fluid.

**13.** The apparatus for controlling injection as claimed in claim 12, wherein:

the control section (50) controls, based on the estimated isobaric specific heat capacity per volume, the pressure (P) of the fluid in the pressure chamber (10) and the temperature (T) of the fluid in the heat chamber (20), for bringing a desired path of a change in an isobaric specific heat capacity per volume [Cp/V] of the fluid, when injecting the fluid with the phase transition from the liquid phase to the gaseous phase, the desired path comprising:

passing through a temperature-pressure condition (i) that realizes the following equality:

$$[Cp/V] = [Cp/V]_L$$

where [Cp/v]L denotes an isobaric specific heat capacity per volume of the fluid in the liquid phase; and
passing through a temperature-pressure condition (ii) that realizes the following equality:

$$[Cp/V] = [Cp/V]_J$$

where [Cp/V]J denotes an isobaric specific heat capacity per volume of the fluid at timing of injection, which isobaric specific heat capacity per volume [Cp/V]J is less than the isobaric specific heat capacity per volume [Cp/V]L of the fluid in the liquid phase and included in a temperature-pressure region extending in close proximity to a high-temperature side of a temperature-pressure region corresponding to a temperature-pressure condition (iii) that realizes an isobaric specific heat capacity per volume [Cp/V]C of the fluid greater than the isobaric specific heat capacity per volume [Cp/V]L of the fluid in the liquid phase

wherein the fluid is injected via the desired path leading from the temperature-pressure condition (i) to the temperature-pressure condition (ii).

**14.** The apparatus for controlling injection as claimed in claim 13, wherein:

the desired path leading from the temperature-pressure condition (i) to the temperature-pressure condition (ii) is either one of a path (i) → (ii) leading to the temperature-pressure condition (ii) subsequently to the temperature-pressure condition (i) and a path (i)→(iii)→(ii) leading from the temperature-pressure condition (i) via the temperature-pressure condition (iii) to the temperature-pressure condition (ii).

**15.** The apparatus for controlling injection as claimed in claim 14, wherein:

assuming that [Cp/V]G denotes an isobaric specific heat capacity per volume of the fluid in the gaseous phase, a relationship of the isobaric specific heat capacity per volume [Cp/V]J of the fluid at the timing of injection with each of the isobaric specific heat capacity per volume [Cp/V]L of the fluid in the liquid phase and the isobaric specific heat capacity per volume [Cp/V]G of the fluid in the gaseous phase, satisfies a relation defined by the following inequality:

$$[Cp/V]L > [Cp/V]J > [Cp/V]G$$

**16.** The apparatus for controlling injection as claimed in claim 15, wherein:

the relationship of the isobaric specific heat capacity per volume [Cp/V]J of the fluid at the timing of injection with each of the isobaric specific heat capacity per volume [Cp/V] L of the fluid in the liquid phase and the isobaric specific heat capacity per volume [Cp/V]G of the fluid in the gaseous phase, further satisfies a relation defined by the following inequality:

$$([Cp/V]L - [Cp/V]J) < ([Cp/V]J - [Cp/V]G)$$

**17.** The apparatus for controlling injection as claimed in claim 12, wherein:

the fluid is a fuel (F) for an internal combustion engine.

**18.** The apparatus for controlling injection as claimed in claim 12, wherein:

the injection section (30) comprises:

an injection nozzle whose bore diameter is set to a predetermined bore size; and
a valve configured to open or close a nozzle hole of the injection nozzle,

wherein the injection nozzle and the valve are configured to achieve a fulfillment of at least the temperature-pressure condition (i) that realizes the equality

$$[Cp/V] = [Cp/V]L.$$

**19.** The apparatus for controlling injection as claimed in claim 12, further comprising:

a pump (11) configured to pressurize the fluid and to supply the pressurized fluid into the pressure chamber (10).

**20.** An internal combustion engine comprising:

an apparatus for injecting a fuel (F) with a phase transition from a liquid phase to a gaseous phase, the apparatus for injecting the fuel (F) comprising:

(a) a pressure chamber (10) provided for pressurizing the fuel (F);
(b) a heat chamber (20) communicating the pressure chamber (10) and provided for heating the fuel (F);
(c) an injection section (30) that injects the fuel (F), pressurized through the pressure chamber (10) and heated through the heat chamber (20);
(d) a pressure detection section (13) that detects a pressure (P) of the fuel (F) in the pressure chamber (10);
(e) a temperature detection section (31) that detects a temperature (T) of the fuel (F) in the heat chamber (20);
(f) an estimation section (50) that estimates an isobaric specific heat capacity per volume of the fuel (F), based on both of the detected pressure (P) and the detected temperature (T); and
(g) a control section (50) that controls injection of the fuel (F), based on the estimated isobaric specific heat capacity per volume of the fuel (F).

**21.** The internal combustion engine as claimed in claim 20, wherein:

the control section (50) controls, based on the estimated isobaric specific heat capacity per volume, the pressure (P) of the fuel (F) in the pressure chamber (10) and the temperature (T) of the fuel (F) in the heat chamber (20), for bringing a desired path of a change in an isobaric specific heat capacity per volume [Cp/V] of the fuel (F), when injecting the fuel (F) with the phase transition from the liquid phase to the gaseous phase, the desired path comprising:

passing through a temperature-pressure condition (i) that realizes the following equality:

$$[Cp/V] = [Cp/V]_L$$

where [Cp/V]L denotes an isobaric specific heat capacity per volume of the fuel (F) in the liquid phase; and passing through a temperature-pressure condition (ii) that realizes the following equality:

$$[Cp/V] = [Cp/V]_J$$

where [Cp/V]J denotes an isobaric specific heat capacity per volume of the fuel (F) at timing of injection, which isobaric specific heat capacity per volume [Cp/V]J is less than the isobaric specific heat capacity per volume [Cp/V]L of the fuel (F) in the liquid phase and included in a temperature-pressure region extending in close proximity to a high-temperature side of a temperature-pressure region corresponding to a temperature-pressure condition (iii) that realizes an isobaric specific heat capacity per volume [Cp/V] C of the fuel (F) greater than the isobaric specific heat capacity per volume [Cp/V] L of the fuel (F) in the liquid phase,

wherein the fuel (F) is injected via the desired path leading from the temperature-pressure condition (i) to the temperature-pressure condition (ii).

22. The internal combustion engine as claimed in claim 21, wherein:

the desired path leading from the temperature-pressure condition (i) to the temperature-pressure condition (ii) is either one of a path (i) → (ii) leading to the temperature-pressure condition (ii) subsequently to the temperature-pressure condition (i) and a path (i) → (iii) → (ii) leading from the temperature-pressure condition (i) via the temperature-pressure condition (iii) to the temperature-pressure condition (ii).

23. The internal combustion engine as claimed in claim 22, wherein:

assuming that [Cp/V]G denotes an isobaric specific heat capacity per volume of the fuel (F) in the gaseous phase, a relationship of the isobaric specific heat capacity per volume [Cp/V]J of the fuel (F) at the timing of injection with each of the isobaric specific heat capacity per volume [Cp/V]L of the fuel (F) in the liquid phase and the isobaric specific heat capacity per volume [Cp/V]G of the fuel (F) in the gaseous phase, satisfies a relation defined by the following inequality:

$$[Cp/V]_L > [Cp/V]_J > [Cp/V]_G$$

24. The internal combustion engine as claimed in claim 23, wherein:

the relationship of the isobaric specific heat capacity per volume [Cp/V] J of the fuel (F) at the timing of injection with each of the isobaric specific heat capacity per volume [Cp/V]L of the fuel (F) in the liquid phase and the isobaric specific heat capacity per volume [Cp/V]G of the fuel (F) in the gaseous phase, further satisfies a relation defined by the following inequality:

$$([Cp/V]_L - [Cp/V]_J) < ([Cp/V]_J - [Cp/V]_G)$$

25. The internal combustion engine as claimed in claim 20, wherein:

the injection section (30) comprises:

an injection nozzle whose bore diameter is set to a predetermined bore size; and
a valve configured to open or close a nozzle hole of the injection nozzle,

wherein the injection nozzle and the valve are configured to achieve a fulfillment of at least the temperature-pressure condition (i) that realizes the equality [Cp/V] = [Cp/V]L.

26. The internal combustion engine as claimed in claim 20, further comprising:

a pump (11) configured to pressurize the fuel (F) and to supply the pressurized fuel (F) into the pressure chamber (10).

# FIG.1

# FIG.2A

F (FUEL)

10 PRESSURE CHAMBER

13 PRESSURE SENSOR

EXHAUST VALVE 43

50

N₂ INTRODUCING VALVE 41

HEAT CHAMBER 20

21 HEATER

P → CONTROLLER → PUMP-DRIVE COMMAND SIGNAL

T → HEATER-CURRENT COMMAND SIGNAL

INJECTION SECTION 30

31 TEMPERATURE SENSOR

40 OBSERVATION CHAMBER

HIGH-PRESSURE PUMP 11

45 WASTE LIQUID VALVE

FUEL TANK

P

OUTLET OF WASTE LIQUID

# FIG.2B

START

READ INFORMATION ABOUT PRESSURE P AND TEMPERATURE T ── S1

ESTIMATE THE CURRENT VALUE OF [Cp/V] BASED ON INFORMATION ABOUT P AND T ── S2

EXECUTE TEMPERATURE CONTROL AND PRESSURE CONTROL BASED ON THE ESTIMATED [Cp/V] TO ACHIEVE DESIRED PATH OF A CHANGE IN ISOBARIC SPECIFIC HEAT CAPACITY PER VOLUME OF FLUID, WHILE REFERRING TO T-P-[Cp/V] CHARACTERISTIC MAP ── S3

RETURN

# FIG.3A

COMPRESSED SELF-IGNITION,
DIRECT-INJECTION INTERNAL
COMBUSTION ENGINE

# FIG.3B

SPARK-IGNITED INTERNAL
COMBUSTION ENGINE

## FIG.4A

n-C7H16 HEPTANE

## FIG.4B

n-C4H10 BUTANE

| ☐ 0-250 | ▨ 250-500 | ▨ 500-750 | ☐ 750-1000 | ▨ 1000-1250 | ▨ 1250-1500 | ☐ 1500-1750 |
| ▨ 1750-2000 | ▨ 2000-2250 | ☐ 2250-2500 | ▨ 2500-2750 | ▨ 2750-3000 | ☐ 3000-3250 | ▨ 3250-3500 |

18

# FIG.4C

n-C6H14 HEXANE

TRIPLE
POINT

[Cp/V]/J·g⁻¹·K⁻¹·m⁻³

3500
3250
3000
2750
2500
2250
2000
1750
1500
1250
1000
750
500
250
0

0.350  0.458  0.567  0.675  0.783  0.892  1.000  1.108

RELATIVE
TEMPERATURE / K·K⁻¹

2.471984179
1.977587343
1.483190508
0.988793672
0.494396836
4.20943E-07

RELATIVE
PRESSURE / MPa·MPa⁻¹

# FIG.4D

C7H8 TOLUENE

TRIPLE
POINT

[Cp/V]/J·g⁻¹·K⁻¹·m⁻³

3500
3250
3000
2750
2500
2250
2000
1750
1500
1250
1000
750
500
250
0

0.301  0.394  0.487  0.580  0.673  0.766  0.858  0.951

RELATIVE
TEMPERATURE / K·K⁻¹

1.817608996
1.454087197
1.090565398
0.727043598
0.363521799
9.54693E-09

RELATIVE
PRESSURE / MPa·MPa⁻¹

| ☐ 0-250 | ▨ 250-500 | ▨ 500-750 | ☐ 750-1000 | ▨ 1000-1250 | ▨ 1250-1500 | ☐ 1500-1750 |
| ▨ 1750-2000 | ▨ 2000-2250 | ☐ 2250-2500 | ▨ 2500-2750 | ▨ 2750-3000 | ☐ 3000-3250 | ▨ 3250-3500 |

# FIG.5

[Cp/V]L   [Cp/V]J

1.68
1.50
1.32
1.13
0.95
0.77
0.58
0.40
0.22
0.04

RELATIVE PRESSURE / MPa·MPa⁻¹

OBSERVED RESULT 1

OBSERVED RESULT 2

0.51 0.54 0.58 0.62 0.65 0.69 0.73 0.76 0.80 0.84 0.88 0.91 0.95 0.99 1.02 1.06 1.10

RELATIVE TEMPERATURE / K·K⁻¹

[Cp/V]G

GAS-LIQUID EQUILIBRIUM LINE

○ INVISIBLE HIGH-SPEED JET FLOW

● SHORT VISIBLE JET FLOW

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10141170 A

- JP 2007168479 A